# EUROPEAN PATENT APPLICATION

(11) **EP 1 897 750 A2**
(43) Date of publication of application: **12.03.2008**
(21) Application number: 07115726.7
(22) Date of filing: 05.09.2007
(51) Int. Cl.: B60Q 1/42, B62J 6/00

(54) **Vehicular direction indicating apparatus**

(30) Priority: 08.09.2006 JP 2006244089; 08.09.2006 JP 2006244088
(71) Applicant: HONDA MOTOR CO., LTD., Tokyo (JP)
(72) Inventor: Takeuchi, Yoshiaki, Saitama 351-0193 (JP)
(74) Representative: Rupp, Christian

(57) **Abstract**

A steering shaft (6) includes a lower end that penetrates through, and projects downwardly from a bracket (8) for supporting an upper end of a front fork tube (10). A steering angle sensor (16) for a flasher canceler is disposed at the lower end of the steering shaft (6). The steering angle sensor (16) is held in position by a holding plate (28) mounted to a lower surface of the bracket (8). A retainer (41) is secured to a stay (40) secured to a portion of a vehicle body frame (7). The retainer (41) is engaged with an engagement portion (32a) of a steering angle sensor shaft (32) of the steering angle sensor (16). Rotation of the steering shaft (6) results in the steering angle sensor (16) shaft of the steering angle sensor being rotated relative to a vehicle body, which detects a steering angle. A flasher canceler control unit (18) is incorporated in a meter unit (46).

## Description

### CROSS-REFERENCE TO RELATED APPLICATIONS

The present application claims priority under 35 USC 119 to Japanese Patent Application Nos. 2006-244089 and 2006-244088 both filed on September 8, 2006 the entire contents of which arc hereby incorporated by reference.

### BACKGROUND OF THE INVENTION

### Field of the Invention

The present invention relates generally to vehicular direction indicating apparatuses. More particularly, to a vehicular direction indicating apparatus including a direction indication automatic canceling device (hereinafter referred to as "flasher canceler") capable of automatically stepping a flash operation of a direction indicator lamp that has been started after a direction-of-travel change operation for a vehicle is completed.

### Description of Background Art

Motorcycles and other types of vehicles include a direction indicating apparatus that, when a direction of travel of the vehicle is to be changed, flashes on and off a direction indicator lamp to indicate its direction of travel as well as the intention of changing its direction of travel. The direction indicating apparatus typically includes a flasher canceler that can automatically stop the flash operation of the direction indicator lamp after the vehicle completes changing its direction of travel. The flasher canceler includes a steering angle sensor and a vehicle speed sensor. When a steering angle and a vehicle speed detected by these sensors satisfy predetermined direction-of travel change conditions, the flasher canceler stops the operation of a flasher relay that flashes on and off the direction indicator lamp, so that the flash operation of the direction indicator lamp is stopped. Japanese Patent Laid-Open No. Hei 11-348652 discloses an example of such a flasher canceler including a steering angle sensor and a vehicle speed sensor.

Japanese Patent Laid-Open No. Sho 59-167374 discloses another type of the flasher canceler. More specifically, the flasher canceler is configured such that, when an operation switch for direction indication is operated, the flasher relay is turned on and a sequence is started to add up the period of time of running. When the cumulative time thereafter satisfies a predetermined condition, the flasher relay is turned off, so that the corresponding indicator is turned off.

It is required that the steering angle sensor of the flasher canceler be disposed near a steering shaft in order for the steering angle sensor to detect a rotational angle of the steering shaft. Disposing a control unit for the flasher canceler away from the steering angle sensor, on the other hand, results in an increased number of parts used and a complicated wiring. It is then possible to integrate the steering angle sensor with the control unit. However, the unitized flasher canceler can be bulky, which can defy installation of the flasher canceler near the steering shaft depending on the model of the vehicle.

### SUMMARY AND OBJECTS OF THE INVENTION

There is therefore a need for a vehicular direction indicating apparatus, in which the steering angle sensor is disposed near the steering shaft and the flasher canceler control unit is disposed away from the steering angle sensor, and yet the wiring, specifically a harness, connecting the steering angle sensor with the flasher canceler control unit is not complicated and a dedicated flasher canceler control unit is not required.

It is an object of the present invention to provide a vehicular direction indicating apparatus including a non-dedicated flasher canceler control unit isolated from a steering angle sensor and a simple harness layout.

To achieve the foregoing object, a first embodiment of the present invention provides a vehicular direction indicating apparatus having a steering angle sensor, a flasher canceler, and a first control unit for the flasher canceler. Specifically, the steering angle sensor is disposed on a steering shaft of the vehicle. The flasher canceler determines a completion of the intended change in the direction of travel at least based on a steering angle detected by the steering angle sensor and stops an ongoing indication of the intended change in the direction of travel. The first control unit for the flasher canceler at least determines the completion of the intended change in the direction of travel and commands a stop of the indication of the intended change in the direction of travel. The first control unit is integrally incorporated in a second control unit that at least produces an output of a control signal on receipt of an input of a vehicle speed signal.

According to a second embodiment of the present invention, the steering angle sensor is disposed on a lower end of the steering shaft. Further, a connector pin for connecting a harness extending from the first control unit for the flasher canceler is oriented toward a forward direction of the vehicle.

According to a third embodiment of the present invention, the second control unit includes any one of a meter unit, a fuel injection control system, and an ignition control system for the vehicle.

In accordance with the first embodiment of the present invention, the second control unit is integrated with the first control unit for the flasher canceler. This suppresses an increase in the number of parts used and reduces cost.

In accordance with the second embodiment of the present invention, the harness leading to the first control unit for the flasher canceler can be accessed from a forward portion of the steering angle sensor. In motorcycles, therefore, there is no likelihood of interference with a surrounding member that is extended from a vehicle body frame toward a position rearward of the steering angle sensor and engaged therewith. There is no likelihood, either, of interference with fork tubes that extend from the lower end of the steering shaft downwardly to the right and left, or the like to support the front wheels.

In accordance with the third embodiment of the present invention, the meter unit is very often disposed at a front upper portion of the steering shaft. Thanks to a close distance between the steering angle sensor and an indication control unit of meters and gauges, harness layout is easy.

The fuel injection control system or the ignition control system is very often disposed near an engine at a center of the vehicle. If the control unit for the flasher canceler is incorporated in the fuel injection or ignition control system, the control unit is disposed in the middle between a front direction indicator and a rear direction indicator lamp. This results in the length of the harness extended to both direction indicator lamps disposed at the front and rear of the vehicle being less likely to be long. Wiring work is therefore easy.

In the known direction indicating apparatuses, the flasher relay is shared between the direction indicator lamp and a hazard lamp for flashing on and off the lamps. Accordingly, when the flasher relay is turned off by the flasher canceler, the flash operation of the hazard lamp is also stopped. To solve this problem, two flasher relays may be used, one for flashing on and off the direction indicator lamp and the other for flashing on and off the hazard lamp. The flasher relay, however, has a high cost. Further, the use of two flasher relays is not preferable from a standpoint of endeavoring to reduce the number of parts used,

The flasher canceler disclosed in Japanese Patent Laid-Open No. 11-348652 has a hazard switch installed in parallel with a flasher canceler circuit. The flasher canceler further includes a bypass switch for operating the flasher relay, the bypass switch being operatively closable with the hazard switch. The addition of the bypass switch, however, calls for prevention of leak caused by water splash.

Another possible problem is that, if a flasher canceling output from a control unit is turned off because of a defective flasher canceler circuit, the original direction indicating function is also disabled, in addition to the flasher canceler system.

It is an object of the present invention to provide a sturdy vehicular direction indicating apparatus having a simplified structure with a reduced number of flasher relays and maintaining the original direction indicating function even with a defective flasher canceler circuit.

To achieve the an object according to an embodiment of the present invention a vehicular direction indicating apparatus is provided that includes a flasher canceler control unit for producing an output of a flasher cancel signal for stopping a direction indicating operation flashing on and off a flasher lamp. The apparatus includes a flasher switch, a flasher relay, a cancel relay, and a hazard switch. The flasher switch is connected to the flasher lamp. The flasher relay is connected in series with the flasher switch. The cancel relay is connected between the flasher relay and the flasher switch. The hazard switch is connected in parallel with the cancel relay. The hazard switch issues a command of an emergency flash operation of the flasher lamp. In the first embodiment of the present invention, the flasher cancel signal is configured so as to turn off the cancel relay.

According to a another embodiment of the present invention, the apparatus further includes a flasher set switch operatively associated with the flasher switch. The cancel relay is turned on when the flasher set switch is turned on.

In accordance with the first and second embodiments of the present invention, the direction indicating operation of the flasher lamp that is flashing on and off is stopped by turning off the cancel relay. The hazard switch is, however, connected in parallel with the cancel relay. Turning on the hazard switch, however, causes the flasher lamp to be connected to the flasher relay. Accordingly, the flasher lamp flashes on and off as a hazard lamp, while the hazard switch is turned on through an on/off operation at predetermined intervals performed by the flasher relay.

As such, a single flasher relay can be shared to perform the flash operation both as direction indication and hazard indication. The operation of the flasher canceler does not affect the hazard indication, either.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Fig. 1 is an enlarged perspective view showing a steering shaft, the view illustrating a mounting condition of a steering angle sensor of a vehicular direction indicating apparatus according to a preferred embodiment of the present invention;

Fig. 2 is a side elevational view showing a motorcycle, to which the vehicular direction indicating apparatus according to the preferred embodiment of the present invention is applied;

Fig. 3 is a perspective view showing a lower portion of the steering shaft, the view illustrates the mounting condition of the steering angle sensor of the vehicular direction indicating apparatus according to the preferred embodiment of the present invention;

Fig. 4 is a side elevational view showing the steering angle sensor;

Fig. 5 is a perspective view showing the steering angle sensor;

Fig. 6 is a side elevational view showing the lower portion of the steering shaft, the view illustrating the mounting structure of the steering angle sensor; and

Fig. 7 is an electrical connection diagram showing a meter unit.

### DETAILED DESCRIPTION OF THE PREFERRED EMBODIMENTS

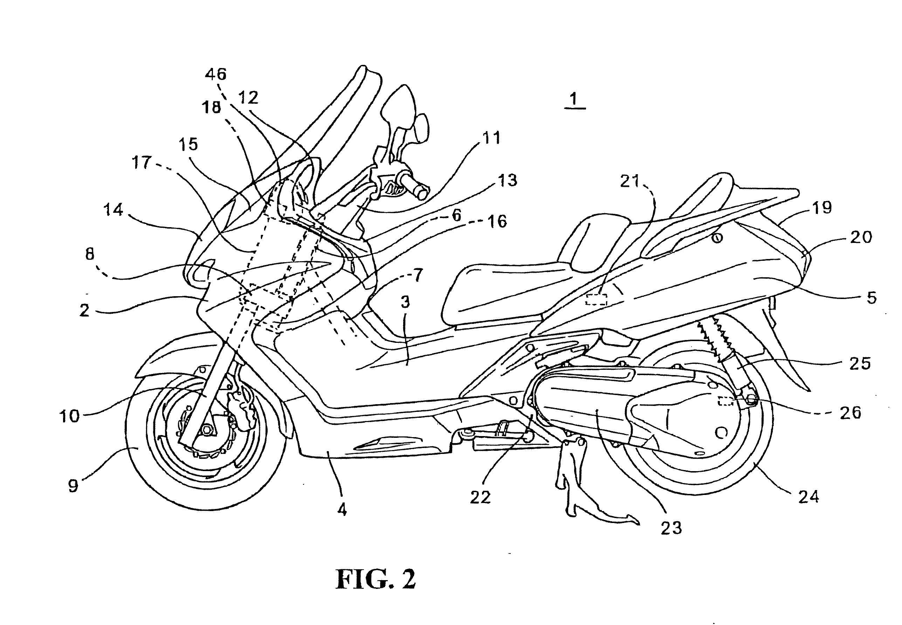

A specific embodiment to which the present invention is applied will be described below with reference to the accompanying drawings. Fig. 2 is a side elevational view showing a motorcycle, to which a vehicular direction indicating apparatus according to a preferred embodiment of the present invention is applied. The embodiment will be described using the motorcycle as an example. It is to be noted, however, that the present invention is applicable to general saddle-riding type vehicles and is not limited to motorcycles.

A scooter-type vehicle 1 includes a vehicle body frame 7 and an engine 22 that are covered with a front cover 2, an inner cover 3, an under cover 4 and a body cover 5. A steering shaft 6 has a head pipe passed vertically therethrough. The head pipe is disposed at a front portion of the vehicle body frame 7. The steering shaft 6 is rotatably supported by the head pipe, The steering shaft 6 has a lower end connected via a bracket 8 to an upper end of a front fork tube 10 that supports a front wheel 9. The steering shaft 6 has an upper end connected to a handlebar 11. A connection between the handlebar 11 and the steering shaft 6 is covered with a meter panel 12 disposed forwardly of the handlebar 11 and a meter cover 13 disposed rearwardly of the handlebar 11, more specifically, on a side of a rider. A meter unit 46 is disposed forwardly of the handlebar 11. The meter unit 46 incorporates therein meters of a plurality of kinds and a meter control unit. The meters include a speedometer, a tachometer, a fuel level gauge, a coolant temperature gauge, an odometer, a clock and a direction-of-travel change indicator (flasher indicator). Part of the functions offered by the meter control unit is shared with a flasher canceler control unit. The flasher canceler control unit 18 is integrated with the meter unit 46.

A headlamp 14, a front flasher 15, and other lighting apparatuses are incorporated into the front cover 2. The vehicle 1 includes a pair of left and right front flashers 15 disposed on either side thereof. Each of the front flashers 15 has a flasher lamp indicating the direction of travel of the vehicle. The flasher lamp serves also as a position lamp and a hazard lamp.

A steering angle sensor 16 is disposed at the lower end of the steering shaft 6. The steering angle sensor 16 detects a steering angle of the steering shaft 6. A harness 17 connected to a front portion of the steering angle sensor 16 extends to reach the flasher canceler control unit 18. A mounting structure for the steering angle sensor 16 will be described in detail later.

A combination light unit 20 is mounted on a rear portion of the body cover 5, more specifically, a rear body cover 19. The combination light unit 20 incorporates therein a rear flasher, a tail lamp, and a stop lamp. The flasher canceler control unit 18 is connected to the rear flasher in the combination light unit 20 through a harness not shown via a flasher relay 21.

The engine 22 is vertically swingably supported on a vehicle body frame 7 substantially at a center of the vehicle body. The engine 22 has an output shaft connected to a rear wheel 24 via a belt type continuously variable transmission 23 and a reduction gear unit (not shown). An output of the engine 22 is thereby transmitted to the rear wheel 24. The belt type continuously variable transmission 23 has a casing rear portion connected to the vehicle body frame 7 via a shock absorber 25. The reduction gear unit includes a vehicle speed sensor 26 that detects a speed of a final gear of the reduction gear unit and produces an output of a corresponding vehicle speed signal. The vehicle speed signal is applied to the meter unit 46 via a harness not shown.

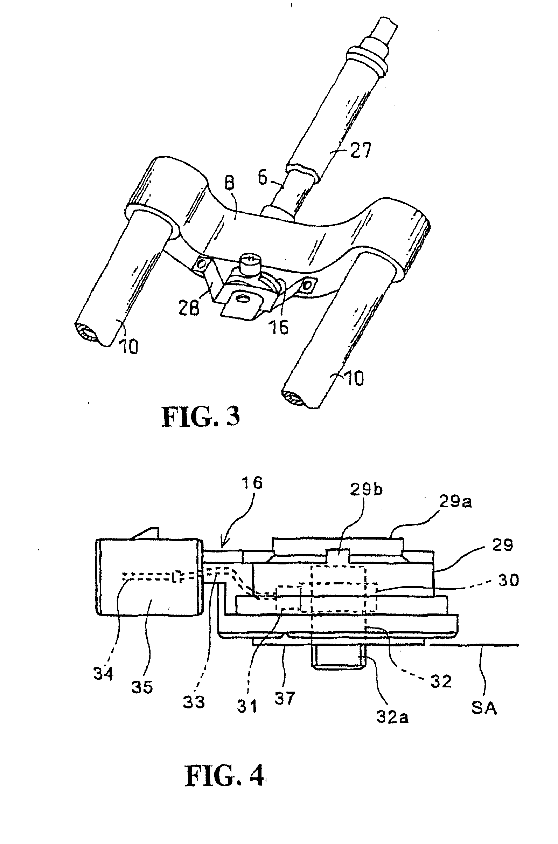

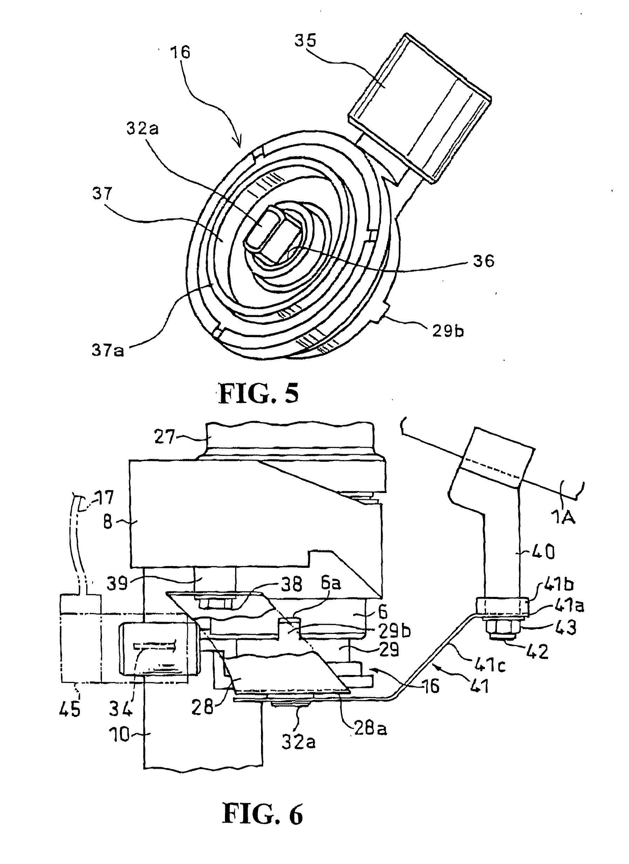

Fig. 3 is a perspective view showing a lower portion of the steering shaft 6. Fig. 4 is a side elevational view showing the steering angle sensor 16. Fig. 5 is a perspective view showing the steering angle sensor 16. Referring to Fig. 3, the steering shaft 6 has a head pipe 27, which is disposed at the front portion of the vehicle body frame 7, passed vertically therethrough. The lower end of the steering shaft 6 includes a portion that passes through the bracket 8 and projects downwardly therefrom. The steering angle sensor 16 is fitted into, and thus positioned by, the lower end of the steering shaft 6. The sensor 16 is held in position from below by a holding plate 28 secured to the bracket 8.

Referring to Figs. 4 and 5, the steering angle sensor 16 has a substantially tubular sensor casing 29. A main body of the steering angle sensor is accommodated in this sensor casing 29. The sensor main body may typically be a type that produces an output of a steering angle detection signal based on a fraction of a power supply voltage picked up at a contact point member 31 sliding over an annular resistor 30. The resistor 30 is mounted around a steering angle sensor shaft 32 that passes vertically through the sensor casing 29. The contact point member 31 is disposed on an outer peripheral surface of the steering angle sensor shaft 32 so as to be in contact with the resistor 30. An input/output wire 33 is connected to the contact point member 31 and the resistor 30. The input/output wire 33 is also connected to a connector output pin 34. The connector output pin 34 is accommodated in a pin cover 35 that extends from the sensor casing 29 perpendicularly to the steering angle sensor shaft 32.

A lid 37 is fitted by insertion to the sensor casing 29. The lid 37 has a shaft through hole 36 made at a center thereof. The steering angle sensor shaft 32 includes an engagement portion 32a at a lower end thereof. The engagement portion 32a includes parallel surfaces formed by cutting part of a peripheral surface thereof, so that the parallel surfaces can be engaged in a slot formed in a retainer to be described later that is to be fixed in the vehicle body frame 7. The lid 37 has an annular end 37a projecting from the sensor casing 29. The annular end 37a has an end face SA that abuts on an upper surface of the holding plate 28 to serve as a holding plate pressure surface.

The sensor casing 29 includes a cylindrical portion 29a disposed at an upper portion thereof. The cylindrical portion 29a further has tabs 29b formed to project in four directions. The cylindrical portion 29a has an outside diameter to be fitted in an inner periphery of the tubular steering shaft 6. Each of the tabs 29b has dimensions and is disposed appropriately so as to be locked in a corresponding one of engagement slits (to be described later) formed on the lower end of the steering shaft 6 at four locations.

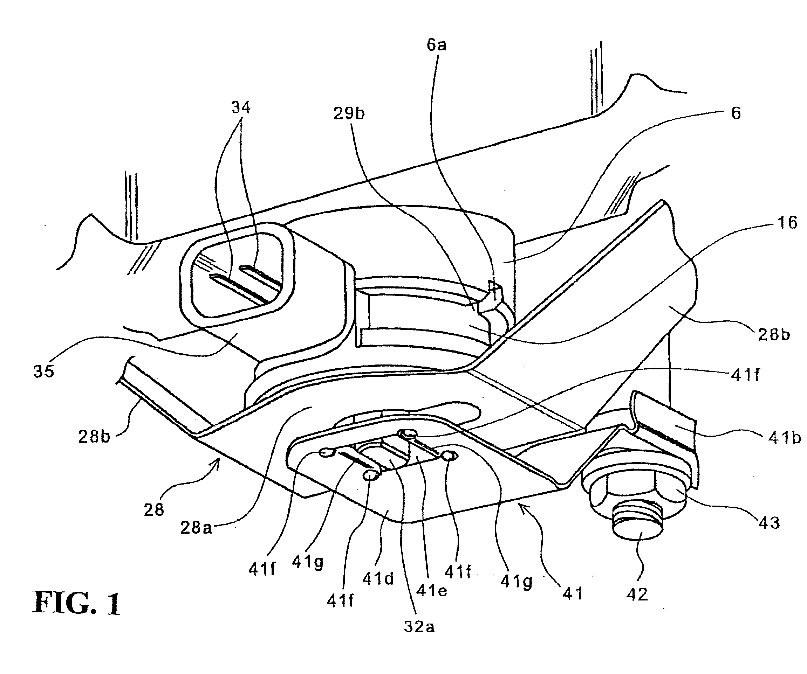

Fig. 1 is an enlarged perspective view showing a lower portion of the steering shaft 6. Fig. 6 is an enlarged side elevational view showing the lower portion of the steering shaft 6. Referring to Figs. 1 and 6, the steering angle sensor 16 is disposed so that the connector output pin 34 faces forward of the vehicle body with the cylindrical portion 29a fitted in the lower end of the steering shaft 6 and the tabs 29b fitted in corresponding ones of engagement slits 6a formed in the lower end of the steering shaft 6.

The holding plate 28 abuts against the steering angle sensor 16 from a downward direction. The holding plate 28 includes a central portion 28a and both end portions 28b. More specifically, the central portion 28a has a surface in abutment with the holding plate pressure surface SA included in the sensor casing 29, The both end portions 28b extend along a length direction of the bracket 8, while approaching the bracket 8. A sleeve-like spacer 39 is disposed between each of the both end portions 28b and the bracket 8, The holding plate 28 is secured to the bracket 8 using bolts 38 installed in the both end portions 28b and the spacers 39.

A stay 40 extends downwardly from a lower portion 1A of the vehicle body frame 7 extended rearwardly from the head pipe 27. A retainer 41 is attached to a. leading end (lower end) of the stay 40, The retainer 41 has a first end 41a secured with a bolt 42 projecting from a lower end of the stay 40 and a nut 43. The first end 41a of the retainer 41 has a pair of vertical portions 41b. Meanwhile, the stay 40 has an end (base of the bolt 42) having a rectangular cross section. The vertical portions 41b can clamp both surfaces of the end of the stay 40 from both sides. This arrangement provides integrity for the retainer 41 relative to the stay 40 and restricts the retainer 41 from rotation relative to the bolt 42.

In addition to the first end 41a, the retainer 41 also includes a slope surface 41c and a second end 41d. More specifically, the slope surface 41c extends from the first end 41a and the second end 41d extends from the slope surface 41 c toward the steering angle sensor 16. The second end 41 d of the retainer 41 includes a slot 41e that is engaged with the engagement portion 32a of the steering angle sensor shaft 32. In addition to being engaged with the engagement portion 32a at the leading end of the steering angle sensor shaft 32, the slot 41e also includes folded tabs 41 g that rise upwardly from edges of holes 41f at four corners of the slot 41e so that the engagement portion 32a is clamped and reliably locked in position and end faces of the slot 41e act as flat springs. Because of the folded tabs 41g, two sides of the slot 41e abut elastically on side surfaces (parallel surfaces) of the engagement portion 32a, so that the retainer 41 and the steering angle sensor shaft 32 can be reliably connected together.

A harness side pin cover 45, provided for the harness 17 extending from the flasher canceler control unit 18 is fitted to an outside of the pin cover 35 accommodating the connector output pin 34. A harness side connector pin (not shown) is thereby connected to the connector output pin 34,

Through the arrangements as described heretofore, operation of the handlebar 11 results in the steering shaft 6 being rotated. At this time, rotation of the steering angle sensor shaft 32 is restricted by the second end of the retainer 41 having the first end fixed to the vehicle body frame, This displaces the steering angle sensor shaft 32 and the contact point member 31 relatively to each other, so that an output of a steering angle detection signal is produced. The steering angle detection signal is transmitted to the flasher canceler control unit 18 via the harness 17.

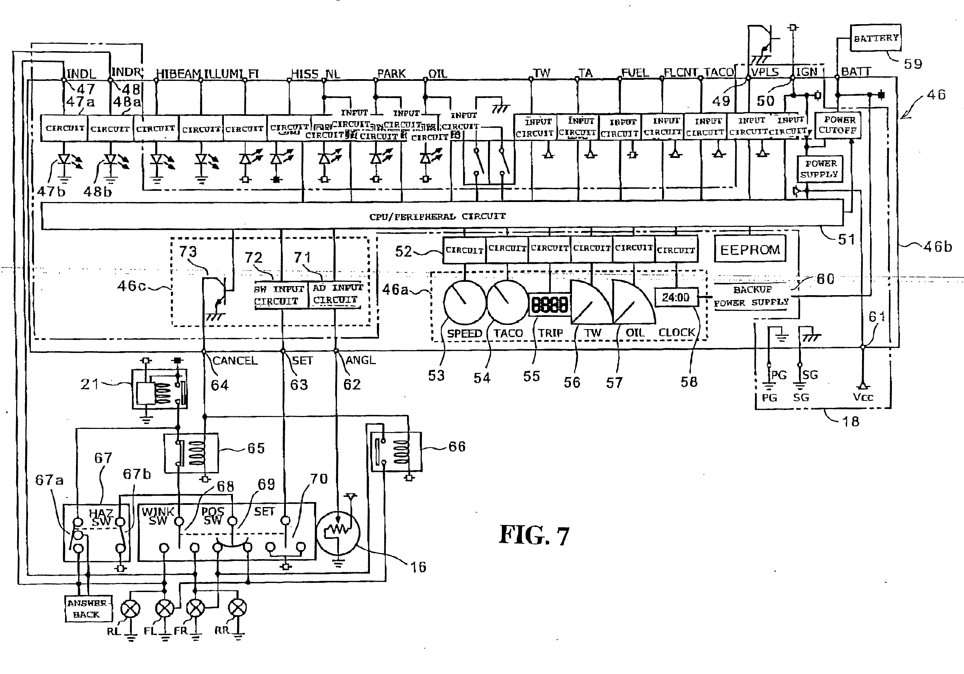

Fig. 7 is an electrical connection diagram showing a portion including the meter unit 46. Referring to Fig. 7, the meter unit 46 includes a meter 46a and a meter control unit 46b. The flasher canceler control unit 18 includes a canceler input/output unit 46c that is added to the meter control unit 46b. Further, the flasher canceler control unit 18 shares circuits, a CPU, and part of peripheral circuits and the like with the meter control unit 46b.

The meter control unit 46b includes flasher indicator input pins 47, 48, an input pin 49, and an input pin 50. The flasher indicator input pins 47, 48 receive left and right flasher flashing signals. The input pin 49 receives a vehicle speed signal VPLS from the vehicle speed sensor 26. The input pin 50 receives a signal IGN that indicates that a key switch is operated and placed in an ignition start position. The meter control unit 46b also includes a number of other input pins. These input pins receive signals of an oil level information OIL from the an oil level sensor, a coolant temperature information TW from an engine temperature sensor, an air cleaner intake air temperature information TA from an intake air temperature sensor, a fuel level information FUEL from a fuel level sensor, an engine speed information TACO from an engine speed sensor, and the like.

The flasher indicator input pins 47, 48 input flasher signals to indicator lighting circuits 47a, 48a, respectively, In response to the flashing signal, the indicator lighting circuits 47a, 48a drive indicators (including light emitting diodes) 47b, 48b, respectively. The vehicle speed signal VPLS and the signal IGN, and the information of various sorts OIL, TW, TA, FUEL, TACO, and the like are inputted to a CPU 51. The CPU 51 includes peripheral circuits and constitutes a microprocessor. The CPU 51 runs a predetermined program to perform processing based on the information inputted thereto. The CPU 51 then inputs a control signal resulting from the processing performed to a meter drive circuit 52. In accordance with the control signal from the CPU 51, the meter drive circuit 52 makes the meter 46a give corresponding information. The meter 46a includes a speedometer 53, an engine tachometer 54, an odometer 55, a coolant temperature gauge 56, an oil level gauge 57, and a clock 58. The meter control unit 46b receives electricity from a battery 59 to constitute a control power supply, supplying the power to a Vce output pin 61. The meter control unit 46b further includes a backup power supply 60 connected to the clock 58. In Fig. 7, a power supply ground pin PG and a signal ground pin SG are provided.

The meter control unit 46b shares the following components with the flasher canceler control unit 18, the CPU 51, the flasher indicator input pins 47, 48, the indicator lighting circuits 47a, 48a, the indicators 47b, 48b, the input pin 49 for receiving the vehicle speed signal VPLS, the input pin 50 for receiving the ignition start signal IGN, the Vcc output pin 61, the power supply ground pin PG, and the signal ground pin SG.

The canceler input/output unit 46c of the flasher canceler control unit 18 includes an input circuit (AD input circuit) 71, a switch input circuit 72, and a switching device 73. The AD input circuit 71 includes an AD converter. The canceler input/output unit 46c further includes an input pin 62, a set input pin 63, and a flasher cancel signal pin 64 for providing external connections for the AD input circuit 71, the switch input circuit 72, and the switching device 73, respectively.

The steering angle detection signal from the steering angle sensor 16 is inputted to the meter control unit 46b by way of the input pin 62, A flasher set signal from a flasher set switch (to be described later) is inputted to the meter control unit 46b via the set signal pin 63. The steering angle detection signal inputted through the input pin 62 is subjected to A/D conversion at the AD input circuit 71 before being inputted to the CPU 51. The flasher set signal inputted through the set signal pin 63 is inputted to the CPU 51 via the switch input circuit 72. The flasher cancel signal outputted from the CPU 51 is inputted to an external device (a cancel relay 65 to be described later) via the flasher cancel signal pin 64.

Relays include the cancel relay 65 and a position relay 66, in addition to the aforementioned flasher relay 21. Switches include a hazard switch 67, a flasher switch 68, a position switch 69, and a flasher set switch 70. The flasher switch 68, the position switch 69, and the flasher set switch 70 are operatively connected with each other. The relays are disposed, for example, at a central position of the vehicle body, upwardly of the engine. The switches are disposed on the handlebar 11 or a surrounding area.

The flasher relay 21 has a coil connected to an oscillator circuit and a contact point. The coil is energized at predetermined intervals, so that the contact point is turned on or off. The flasher relay 21 is also used for operating the hazard lamp. Power supply is connected to a contact point of the cancel relay 65 via the contact point of the flasher relay 21 and to a first switch 67a of the hazard switch 67 of a double-row type. The power supply connected to the flasher relay 21 is connected to the flasher switch 68 via the cancel relay 65.

Power supply is separately connected to a second switch 67b of the double-row hazard switch 67. This power supply is connected to a common pin of the position switch 69 via the second switch 67b of the hazard switch 67.

A coil of the cancel relay 65 has a first end connected to the power supply and a second end connected to the flasher cancel signal pin 64. Similarly, a coil of the position relay 66 has a first end connected to the power supply and a second end connected to the flasher cancel signal pin 64, A coil of the flasher set switch 70 has a first end connected to the power supply and a second end connected to the set signal pin 63.

The first switch 67a of the hazard switch 67 has a common contact point and two individual contact points. One of the two individual contact points is connected to two right flasher lamps FR, RR at the front and rear of the vehicle body and to the flasher indicator input pin 47. The other of the two individual contact points is connected to two left flasher lamps FL, RL at the front and rear of the vehicle body and to the flasher indicator input pin 48.

One of the two individual contact points of the position switch 69 is connected to the front right flasher lamp FR at the front of the vehicle body and to the contact point of the position relay 66. The other of the two individual contact points of the position switch 69 is connected to the front left flasher lamp FL at the front of the vehicle body and to the contact point of the position relay 66,

In the foregoing arrangements of relays and switches, the rider of the vehicle may operate the flasher switch 68 so that the individual contact point connected to the front left flasher lamp FL and the rear left flasher lamp RL is selected in order to change the traveling path of the vehicle to the left. This turns on the flasher set switch 70 and the resultant signal is inputted from the set signal pin 63 to the CPU 51 via the switch input circuit 72, Turning on the flasher set switch 70 results in an operation start command being supplied from the CPU 51 to the flasher relay 21. The flasher relay 21 then turns on and off its contact point intermittently. In accordance with the on-off operation, the power is supplied intermittently to the front left flasher lamp FL and the front right flasher lamp FR, so that the front left flasher lamp FL and the front right flasher lamp FR flash on and off. At this time, the cancel relay 65 remains on.

The rider of the vehicle may operate the flasher switch 68 so that the individual contact point connected to the front right flasher lamp FR and the rear right flasher lamp RR is selected in order to change the traveling path of the vehicle to the right. This also turns on the flasher set switch 70 and the resultant signal is inputted from the set signal pin 63 to the CPU 51 via the switch input circuit 72. Turning on the flasher set switch 70 results in an operation start command being supplied from the CPU 51 to the flasher relay 21. The flasher relay 21. then turns on and off its contact point intermittently. In accordance with the on-off operation, the power is supplied intermittently to the front right flasher lamp FR and the rear right flasher lamp RR, so that the front right flasher lamp FR and the rear right flasher lamp RR flash on and off. While the flasher lamps FR, RR, FL, RL are made to flash on and off, the flasher indicators, that is, the indicators 47b, 48b are energized by this flash signal.

The individual contact points of the first switch 67a of the hazard switch 67 are connected to all flasher lamps FR, RR, FL, RL. When the hazard switch 67 is operated, therefore, all flasher lamps FR, RR, FL, RT. flash on and off.

The front right flasher lamp FR and the front left flasher lamp FL of the flasher lamps FR, RR, FL, RL function also as position lamps, When the flasher switch 68 is not operated, the common contact point of the position switch 69 is in contact with two individual contact points at the same time. Power is therefore connected to the front right flasher lamp FR and the front left flasher lamp FL through the second switch 67b of the hazard switch 67, turning on the front flasher lamps FR, FL.

When the flasher switch 68 is operated, only one of the two individual contact points of the position switch 69 is selected and the position switch 69 is operated so as to be connected to the second switch 67b of the hazard switch 67. For example, when the flasher switch 68 is placed in the side of the individual contact point connected to the front right flasher lamp FR and the rear right flasher lamp RR, the common contact point of the position switch 69 leaves the individual contact point connected to the front right flasher lamp FR. The front right flasher lamp TR is then halted from lighting as a position lamp. Similarly, when the flasher switch 68 is placed in the side of the individual contact point connected to the front left flasher lamp FL and the rear left flasher lamp RL, the common contact point of the position switch 69 leaves the individual contact point connected to the front left flasher lamp FL. The front left flasher lamp FL is then halted from lighting as a position lamp. As such, the position lamp does not light up when the flasher switch 68 is operated. This ensures proper and clear flasher indication.

When the hazard switch 67 is on, more specifically, when the first switch 67a of the hazard switch 67 is on, the second switch 67b of the hazard switch 67 is off. Lighting as a position lamp is also halted at this time. This ensures proper and clear hazard lamp indication.

The flasher switch 68 is operated to turn on the flasher set switch 70, which lets the CPU 51 recognize that a flash operation is started. The CPU 51 then starts processing to determine whether or not the flash operation is to be stopped. The flash operation is stopped as soon as it is determined that the vehicle completes changing the direction of travel. The completion of the change in the direction of travel can be determined by, for example, the steering angle detected by the steering angle sensor 16 having returned to one during a straight-ahead motion of the vehicle, or the vehicle speed detected by the vehicle speed sensor 26 having exceeded a predetermined value, or the like.

Determining that the change in the direction of travel is completed based on the steering angle, the vehicle speed, or the like, the CPU 51 produces an output of a cancel signal to turn on the switching device 73. The coil of the cancel relay 65 is then energized and the contact point thereof is turned off, so that the flash operation is stopped.

When the coil of the cancel relay 65 is then energized as a result of the attempt to stop the flash operation, the coil of the position relay 66 is energized at the same time. The cancel relay 65 and the position relay 66 are operated in inverted logic with respect to each other. When the flash operation is stopped, the contact point of the position relay 66 is turned on. The front left flasher lamp FL and the front right flasher lamp FR are then turned on to function as position lamps,

As described heretofore with reference to the preferred embodiment of the present invention, the CPU 51 of the meter unit 46 is adapted to offer the flasher canceler control function. Further, the AD input circuit 71, the switch input circuit 72, the switching device 73, and components of the flasher canceler control unit 18 including the indicator lighting circuits 47a, 48a and the light emitting diodes 47b, 48b are incorporated in the meter unit 46.

Although the foregoing describes the exemplary preferred embodiment, those having normal skill in the art will recognize various changes, modifications, additions and applications other than those specifically mentioned herein without departing from the spirit of this invention. What matters is that the steering angle sensor and the control unit are disposed independently of each other and the control unit for the flasher canceler is adapted to be incorporated in the second control unit. The type of the steering angle sensor and the mounting structure for the steering angle sensor mounted on the vehicle body are not limited to those of the embodiment of the present invention described above. A well-known algorithm may also be used for determining flasher cancel timing.

In addition, the flasher canceler control unit 18 may be incorporated in the fuel injection or ignition control system, not limited to the arrangement of incorporating the flasher canceler control unit 18 in the meter unit 46.

The contact point of the cancel relay 65 may be turned off through the flasher canceler function. Even in this case, since the hazard switch 67 is connected to the flasher relay 21, turning on the hazard switch 67 causes all flasher lamps FL, FR, RL, RR to be connected to the flasher relay 21 via the first switch 67a of the hazard switch 67. The flasher lamps FL, FR, RL, RR are then made to flash on and off according to make or break of the flasher relay 21.

The contact point of the cancel relay 65 is normally closed (NC). Even if the flasher canceler control function fails to turn off the signal from the flasher cancel signal pin 64, the flasher lamps FL, FR, RL, RR and the flasher relay 21 are connected through this NC contact point and the flasher switch 68. The originally intended direction indicating function can thus be maintained.

The configuration shown in Fig. 7 may be modified to include a normally open (NO) cancel relay 65 contact point and a NC position relay 66 contact point. In this case, the logic is inverted of the flasher canceler signal outputted from the CPU 51 when it is determined that the direction of travel of the vehicle is completed.

Through the foregoing modifications, the switching device 73 is turned on with the output from the CPU 51 during a flash operation and, when the direction of travel of the vehicle is completed, the CPU 51 turns off the switching device 73 to stop the flash operation. On the other hand, the position relay 66 remains off during the flash operation and is turned on when the flasher canceler is activated,

As described with reference to the embodiment of the present invention, the flasher relay 21 is used also as the hazard relay and is connected to the flasher switch 68 via the cancel relay 65 having a more simplified construction than the flasher relay 21, This solves the problem that the hazard function is also stopped upon flasher cancellation, without having to increase the number of flasher relays. A sturdy system capable of maintaining the originally intended direction indicating function can be realized even with the signal turned off from the flasher cancel signal pin for a failed system.

The CPU 51 of an indication control unit of the meter panel 12 is adapted to offer the flasher canceler control function. Further, the AD input circuit 71, the switch input circuit 72, the switching device 73, the indicator lighting circuits 47a, 48a, the indicators 47b, 48b, and the like are incorporated in the control unit of the meter panel 12.

The present invention is not, however, limited to the foregoing arrangements. More specifically, the flasher control function and the flasher canceler control function may be independent from the indication control unit, being disposed near the steering angle sensor 16 or incorporated integrally in a fuel injection control system or an ignition control system. In addition, the type of the steering angle sensor and a mounting structure for the steering angle sensor mounted on the vehicle body are not limited to those of the embodiment of the present invention described above. A well-known algorithm may also be used for determining flasher cancel timing.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A vehicular direction indicating apparatus comprising:
a flasher lamp indicating an intended change in a direction of travel of a vehicle in accordance with an operation of a flasher switch;
a steering angle sensor disposed on a steering shaft of the vehicle;
a flasher canceler stopping an ongoing indication of the intended change in the direction of travel when determining a completion of the intended change in the direction of travel at least based on a steering angle detected by the steering angle sensor; and
a first control unit for the flasher canceler at least determining the completion of the intended change in the direction of travel and commanding a stop of the indication of the intended change in the direction of travel, the first control unit being integrally incorporated in a second control unit at least producing an output of a control signal on receipt of an input of a vehicle speed signal.

2. The vehicular direction indicating apparatus according to claim 1,wherein the steering angle sensor is disposed on a lower end of the steering shaft; and
a connector pin for connecting a harness extending from the first control unit for the flasher is disposed on the steering angle sensor and oriented toward a forward direction of the vehicle.

3. The vehicular direction indicating apparatus according to any of the preceeding claims, wherein the second control unit includes at least one of a meter unit, a fuel injection control system and an ignition control system for the vehicle.

4. The vehicular direction indicating apparatus according to any of the preceding claims, wherein the second control unit includes at least one of a meter unit, a fuel injection control system and an ignition control system for the vehicle.

5. The vehicular direction indicating apparatus according to any of the preceding claims, wherein the steering angle sensor includes a sensor casing with a main body of the steering angle sensor being disposed therein.

6. The vehicular direction indicating apparatus according to any of the preceding claims, wherein the main body sensor outputs a steering angle detection signal based on a power supply voltage picked up from a contact point member sliding over a resistor.

7. The vehicular direction indicating apparatus according to any of the preceding claims, wherein the resistor is mounted on the steering shaft passing vertically through the sensor casing and the contact point member is disposed on an outer surface of a steering angle sensor shaft.

8. A vehicular direction indicating apparatus comprising:
a flasher lamp indicating an intended change in a direction of travel of a vehicle in accordance with an operation of a flasher switch;
a steering angle sensor disposed adjacent to a steering shaft of the vehicle;
a flasher canceler for stopping an ongoing indication of the intended change in the direction of travel when determining a completion of the intended change in the direction of travel at least based on a steering angle detected by the steering angle sensor; and
a non-dedicated flasher canceler control unit for at least determining the completion of the intended change in the direction of travel and commanding a stop of the indication of the intended change in the direction of travel, the non-dedicated flasher canceler control unit being integrally incorporated in a second control unit at least producing an output of a control signal on receipt of an input of a vehicle speed signal.

9. The vehicular direction indicating apparatus according to any of the preceding claims, wherein the steering angle sensor is disposed on a lower end of the steering shaft; and
a connector pin for connecting a harness extending from the non-dedicated flasher canceler control unit is disposed on the steering angle sensor and oriented toward a forward direction of the vehicle.

10. The vehicular direction indicating apparatus according to any of the preceding claims, wherein the second control unit includes at least one of a meter unit, a fuel injection control system and an ignition control system for the vehicle.

11. The vehicular direction indicating apparatus according to any of the preceding claim, wherein the second control unit includes at least one of a meter unit, a fuel injection control system and an ignition control system for the vehicle.

12. The vehicular direction indicating apparatus according to any of the preceding claims, wherein the steering angle sensor includes a sensor casing with a main body of the steering angle sensor being disposed therein.

13. The vehicular direction indicating apparatus according to any of the preceding claims, wherein the main body sensor outputs a steering angle detection signal based on a power supply voltage picked up from a contact point member sliding over a resistor.

14. The vehicular direction indicating apparatus according to any of the preceding claims, wherein the resistor is mounted on the steering shaft passing vertically through the sensor casing and the contact point member is disposed on an outer surface of a steering angle sensor shaft.

15. A vehicular direction indicating apparatus having a flasher canceler control unit for producing an output of a flasher cancel signal for stopping a direction indicating operation flashing on and off a flasher lamp, the apparatus comprising:
a flasher switch connected to the flasher lamp;
a flasher relay connected in series with the flasher switch;
a cancel relay connected between the flasher relay and the flasher switch; and
a hazard switch connected in parallel with the cancel relay, the hazard switch for
commanding an emergency flash operation of the flasher lamp;
wherein the flasher cancel signal is configured so as to turn off the cancel relay.

16. The vehicular direction indicating apparatus according to any of the preceding claims, and furthering including a flasher set switch operatively associated with the flasher switch, wherein the cancel relay is turned on when the flasher set switch is turned on.
